# EUROPEAN PATENT APPLICATION

(11) **EP 1 308 807 A2**
(43) Date of publication of application: **07.05.2003**
(21) Application number: 02256962.8
(22) Date of filing: 08.10.2002
(51) Int. Cl.: G05B 19/042, G05B 19/414

(54) **Embedded language interpretation for configuration of fixturing applications**

(30) Priority: 31.10.2001 US 1319
(71) Applicant: Agilent Technologies, Inc., Palo Alto, CA 94306 (US)
(72) Inventor: Jones, Terrence, Fort Collins, CO 80521 (US); Brandes, Gregory E., Fort Collins, CO 80526 (US)
(74) Representative: Jackson, Richard Eric

(57) **Abstract**

A structure and method is disclosed for modifying the operation of a fixturing device without the requirement to change the fixture's firmware or control software. The method (500) uses a macro language that describes the operation of the fixture (430), and control software (420) that maps hardware resources to logical descriptors. The hardware state of the fixture is monitored and changes in state are logged as events (540, 550). The fixture firmware responds to these events by autonomously triggering the execution of a pre-stored macro (560). This event-driven approach provides the flexibility to operate the fixture without the use of controlling software. It is also possible to trigger the execution of a macro through the use of one or more commands external to the fixturing device.

## Description

### TECHNICAL FIELD

The present invention relates generally to test and evaluation equipment and more specifically to the use of a fixture system in automated or semi-automated environments.

### BACKGROUND OF THE INVENTION

A fixturing device is a mechanical device that is capable of holding a product stationary and supports motions that allow for connection to the product. A fixture system comprises a fixturing device, and the associated hardware and software that are used to interact with the product under test. A fixture system is often used in an automated or semi-automated environment. The product that resides within a fixturing device can require customization for integration between the fixturing device and the product. Some examples of products that may be placed within a fixturing device of a fixture system are cellular phones, printed circuit boards, portable receivers, etc.

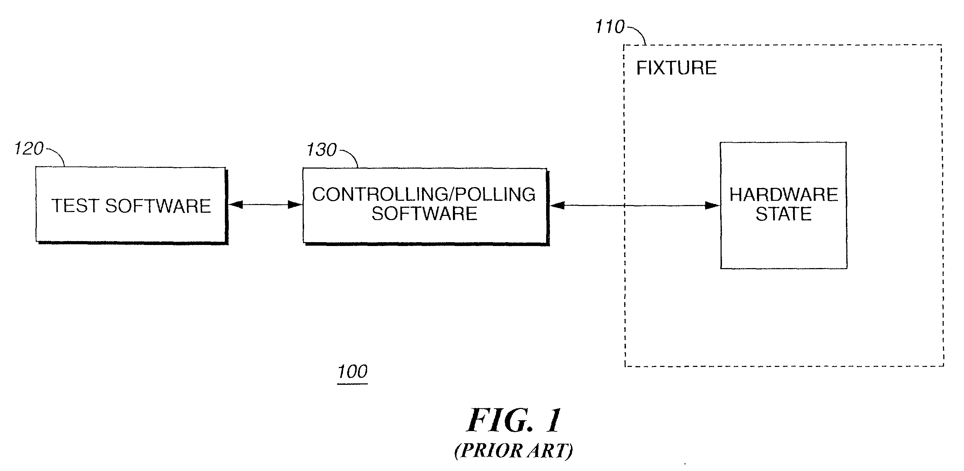

There are several approaches that are currently used to control the manner in which the fixturing device interacts with the product and the environment external to the fixturing device. Referring to the block diagram 100 of **FIG. 1**, a first type of fixture system is shown. The fixturing device within this fixture system does not utilize an embedded controller or firmware. Thus, all control of the fixturing device is accomplished through cables to an external controller. This type of fixturing device depends upon external software for its basic operation, and is not able to operate autonomously. Fixturing device 110 is polled by control software 130. Supervising test software 120 receives the results of the polls executed by control software 130 and sends commands that control software 130 uses to change the state of fixturing device 110. As the software responsible for testing the device under test (DUT), test software 120 must interact to varying degrees with the fixture.

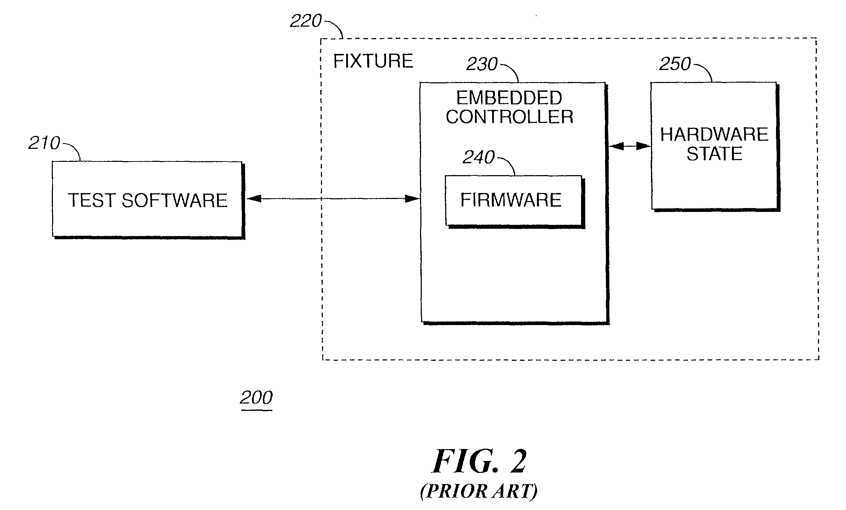

In **FIG. 1**, the responsibility for correct fixturing operation resides external to the fixturing device of the fixture system. It is also possible to place the capabilities for controlling the fixturing device within the physical confines of the fixturing device. This possibility is shown in the block diagram 200 of **FIG. 2**. This type of fixturing device 220 has an embedded controller 230 with advanced firmware 240. The firmware 240 supports an extensive command set that includes high-level commands for normal operation. The test software 210 does not need to have intimate knowledge of the fixturing device 220 internal operation, although the fixturing device 220 does depend upon the controlling software 210 for basic operation. This is because the controlling software 210 polls the fixturing device 220 for changes in state, prior to executing commands to change the state of the fixturing device 220. Thus, normal operation requires that many commands be transmitted from the controlling software 210 to the fixturing device 220, leading to complexity in the controlling software. Also, changes to the high-level commands supported by the fixturing device 220 require an update to the firmware 240. An example of such a high-level command is "Drawer Open." So, while the controlling software 210 does not require intimate knowledge of the fixturing device's 220 internal operation, the controlling software is preferably capable of handling the monitoring of the fixture state to maintain accuracy of the fixture state of fixturing device 220. It would be advantageous to have an easier approach to updating the high-level functions or commands supported by fixturing device 220.

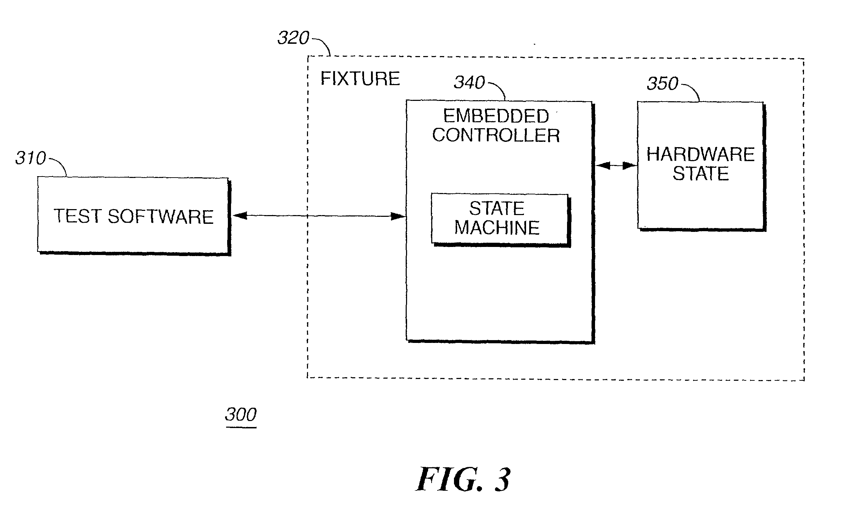

A third approach to interfacing with fixturing devices within a fixture system 300 is shown in **FIG. 3.** This approach uses an embedded controller 340, such as a programmable logic controller (PLC), embedded within fixturing device 320 to control fixture system operation and to implement logic within the fixture as a state machine. This type of fixturing device is operable to be controlled as a state machine and or from the outside via controlling software 310. Often the design using an embedded controller 340 allows the fixturing device 320 to be operated autonomously. The embedded controller 340 is operable to respond to events 330 generated by changes in the hardware state 350 of the fixturing device 320. As a state machine, the fixture will respond to changes in hardware state; in this approach, there are no high-level commands, only states. The external software 310 will trigger the fixture to enter the 'begin test' state (possibly via a command) and will then wait for the fixture to trigger the software that a test is complete. This approach lacks the flexibility of easy modification and the capability of being command driven as well.

There is an unmet need in the art for a fixturing system comprising a fixturing device that may be easily programmed, operate autonomously, be easily upgradeable, and limit the amount of communication between the fixturing device and the controlling software of the fixture system.

### SUMMARY OF THE INVENTION

It is an object of the invention to allow the fixturing device to operate without external interaction (autonomously).

It is a further object of the invention to limit the number of commands sent from the controlling software to software internal to the fixturing device.

It is yet another object of the invention to enable time critical commands to be executed without a dependency on the controlling software.

It is yet another object of the invention that the fixturing device be upgradeable independent of the changes to the firmware.

It is a further object of the invention that macros be executed by stimulus internal to the fixture.

It is yet another object of the invention that macros be available upon powering up the fixturing device without the need to download from controlling software.

Therefore, according to the structure and method of the present invention, an embedded language interpreter for the configuration of fixturing devices is disclosed. The structure of the present invention utilizes firmware internal to the fixturing device to control the internal fixturing device state autonomously. The firmware interacts with macros stored in memory. In the preferred embodiment of the present invention, the macros are stored in local nonvolatile memory. These macros are triggered by events generated by changes in the state of the fixturing device hardware. The firmware is also operable to interact with external controlling software, in order to make changes to the firmware, macros, or the state of the fixturing device hardware, The method of the present invention allows the behavior of a fixturing device to be quickly and programmatically modified without the need to change the fixturing device's firmware or controlling software of the fixture system. The method employs a custom macro language that is used to describe the operation of the fixturing device. The firmware monitors particular hardware states as referenced by an event. When a hardware state change matches what is specified by the event, a specified macro is triggered to execute. Events are programmable and stored in non-volatile memory just like macros. They differ in that they are not interpreted, but they are programmed along with all of the other macros. The use of pre-stored events allows the fixturing device firmware to autonomously trigger the execution of a pre-stored macro and therefore run without the need for controlling software. The individual custom macros are interpreted at runtime, therefore allowing changes to the operation of the fixturing device without changes being made to the fixture device's firmware or the controlling software. The macro language created for a specific application can be very specialized to a fixturing device type. This allows for macro creation and modification by individuals not trained in the internal workings of the software, the fixture system and the fixturing device.

### BRIEF DESCRIPTION OF THE DRAWINGS

The novel features believed characteristic of the invention are set forth in the claims. The invention itself, however, as well as a preferred mode of use, and further objects and advantages thereof, will best be understood by reference to the following detailed description of an illustrative embodiment when read in conjunction with the accompanying drawings, wherein:
**FIG. 1** shows a block diagram of a fixture system comprising a fixturing device that is controlled externally, according to the prior art.
**FIG. 2** shows a block diagram of a fixture system that utilizes advanced firmware and control software to control fixturing device operation, according to the prior art.
**FIG. 3** shows a block diagram of a fixture system that uses an embedded controller to control fixturing device operation, according to the prior art.
**FIG. 4** shows a block diagram of a fixture system that utilizes event driven firmware and macros to control fixturing device operation, according to the present invention.
**FIG. 5** shows a flow diagram for the construction and operation of a fixture system that utilizes advanced firmware, according to the present invention.

### DESCRIPTION OF THE INVENTION

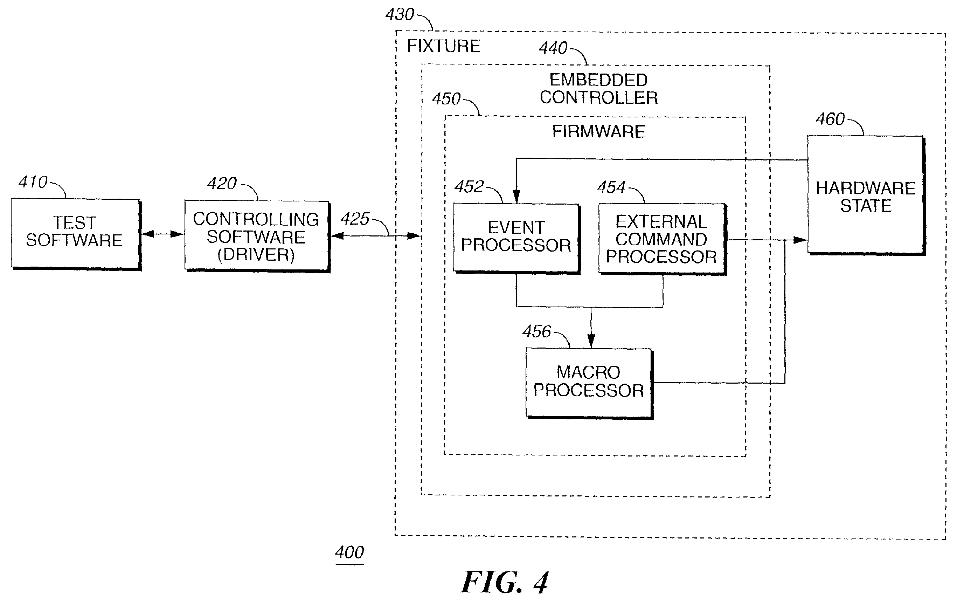

The present invention discloses a structure and method for embedded language interpretation for the configuration of fixturing device applications. Referring to **FIG. 4,** the structure of a fixture system 400 according to a preferred embodiment of the present invention is shown. Controlling driver software 420 is coupled to fixturing device 430 via a cable 425; cable 425 may be an RS-232 cable. Fixturing device 430 is a mechanical device that is operable to support a product and further supports motions that allow for connection to external devices. Fixturing device 430 contains electronic resources such as sensors, switches, LEDs, multiplexors, and relays. Fixturing device 430 additionally has an embedded controller 440 having firmware 450 capable of processing events, external commands and macro via event processor 452, external command processor 454, and macro processor 456 functionality, respectively. Controlling software 420 interacts with fixturing device 430 through one or more commands that are sent to fixturing device 430 via cable 425.

Automation test software 410, which is coupled to controlling software 420, monitors the state of the controlling software and responds to hardware state errors. Test software 410 monitors fixture state 460 (via the control software 420), looking for the state "ready to test". This state indicates to the test software 410 that it can begin testing the DUT. Fixturing device 430 acts autonomously without direct control with respect to low-level controls, such as "Close Drawer," "Engage DUT,"..., "Lower Speaker," interacting with the fixture's operator, and is not dependent on the test or controlling software 410, 420. When the test software 410 completes a test, it indicates via a command to the controlling software 420 that the test is complete. The controlling software 420 then triggers a macro that opens the fixture to allow the next DUT to be inserted and the cycle repeated.

Commands sent by controlling software 420 are receivable internal to fixturing device 430 by firmware 450. An additional function of the controlling software 420 is to map fixturing device resources to logical names, thus providing a basis for communication between the fixturing device 430 and external software. Macro processor 456 responds to the one or more commands receivable from controlling software 420 by loading and executing one or more macros stored in memory. Other commands from controlling software 420 may be standard low-level commands embodied in one or more macros. The macros 450, coupled to firmware 460, contain one or more executable statements that have been previously compiled by controlling software 420. Macros 460 may be triggered by controlling software 420 or by one or more events of fixturing device 430. Events are triggered by a change in the hardware state 470 of fixturing device 430 and are processed by event processor 452. Events 440 are coupled to the one or more macros and to the hardware state 470 of fixturing device 430.

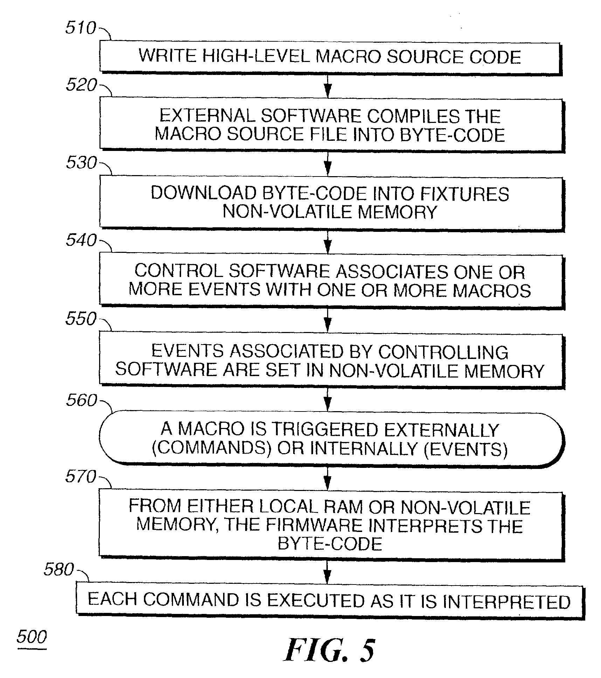

According to the method of the present invention, the behavior of fixturing device 430 may be quickly and programmatically modified without making changes to the firmware 460 or the controlling software 420. The method uses a custom macro language that specifies the operation of the fixturing device 430. Events 440 are used to trigger the execution of a pre gored macro and are operable to run without supporting software. Referring now to FIG. 5, a high level flow diagram 500 according to an embodiment of the method of the present invention is shown. A user of the invention first writes high-level source code (block 510). The macros may be written as source code in a standard text file and compiled by the controlling software and downloaded to the fixture at blocks 520 and 530. In the preferred embodiment, the source code is compiled into byte-code by the control software 420. The byte-code is then transferred by the external control software 420 to firmware 450. Firmware 450 selects the location in nonvolatile memory for the compiled macro byte-code.

Events are programmed along with the macros in the macro source code file. When the controlling software 420 compiles the macros it also compiles the events and sends both to the firmware 450. Events are different from macros in that they are not interpreted by the firmware; instead they are compared by the firmware against current hardware state changes looking for matches.

One of the functions of the control software 420 is to associate one or more events with one or more macros (block 540). At the completion of this association, events are placed in non-volatile memory (block 550). Prior to use of the fixturing device 430, the control software 420 is operable to compare the macro revisions stored in the fixture nonvolatile memory, representing the macros currently stored in memory, with the revision specified by the default macro file. If the revisions do not match, control software 420 downloads compiled macros to nonvolatile memory from a default file. The fixturing device may now be used with the firmware and controlling software. It should be noted that it is possible for macros to be triggered by stimuli, including internal events and external events (block 560). An example of an internal event is a change in the hardware state of the fixturing device 430. An example of an external event is a command sent by the control software 420, and receivable by the macro processor firmware 456 that causes a macro to be executed. When a macro is to be executed, the firmware 456 copies the byte-code from non-volatile memory into RAM. The firmware 460 then interprets the byte-code (block 570). The firmware 460 operates on the byte-code by executing each command as it is interpreted (block 580). In the preferred embodiment of the present invention, the byte code is interpreted using a recursive command-interpreting algorithm. Sample macro pseudocode for programming an event is shown below. While the macro code is written in a custom language, it is similar to other simple high-level programming languages. Please note that text contained within the markings /* ... */ represent what would be comments in the macro source code.

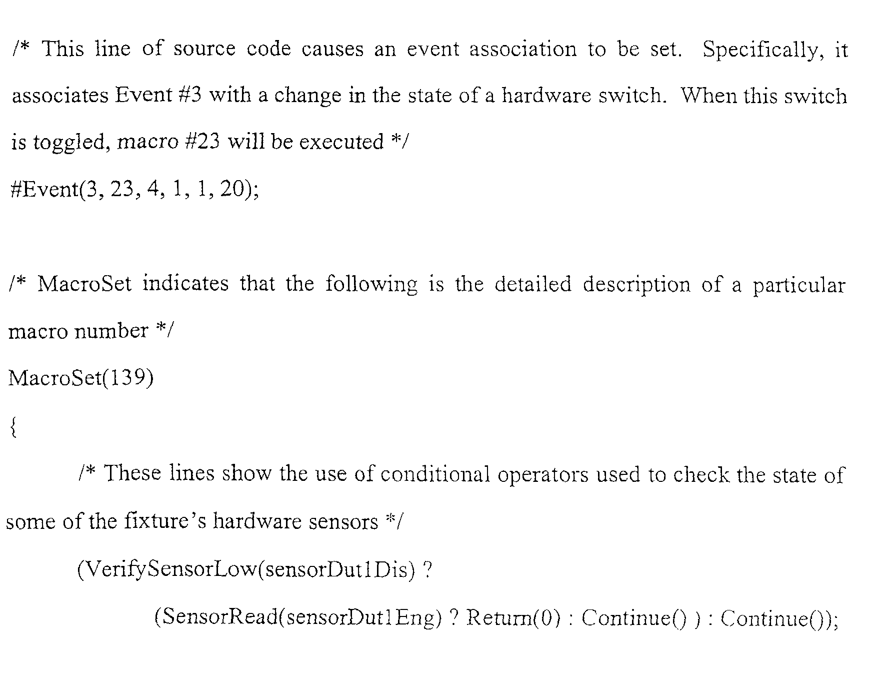

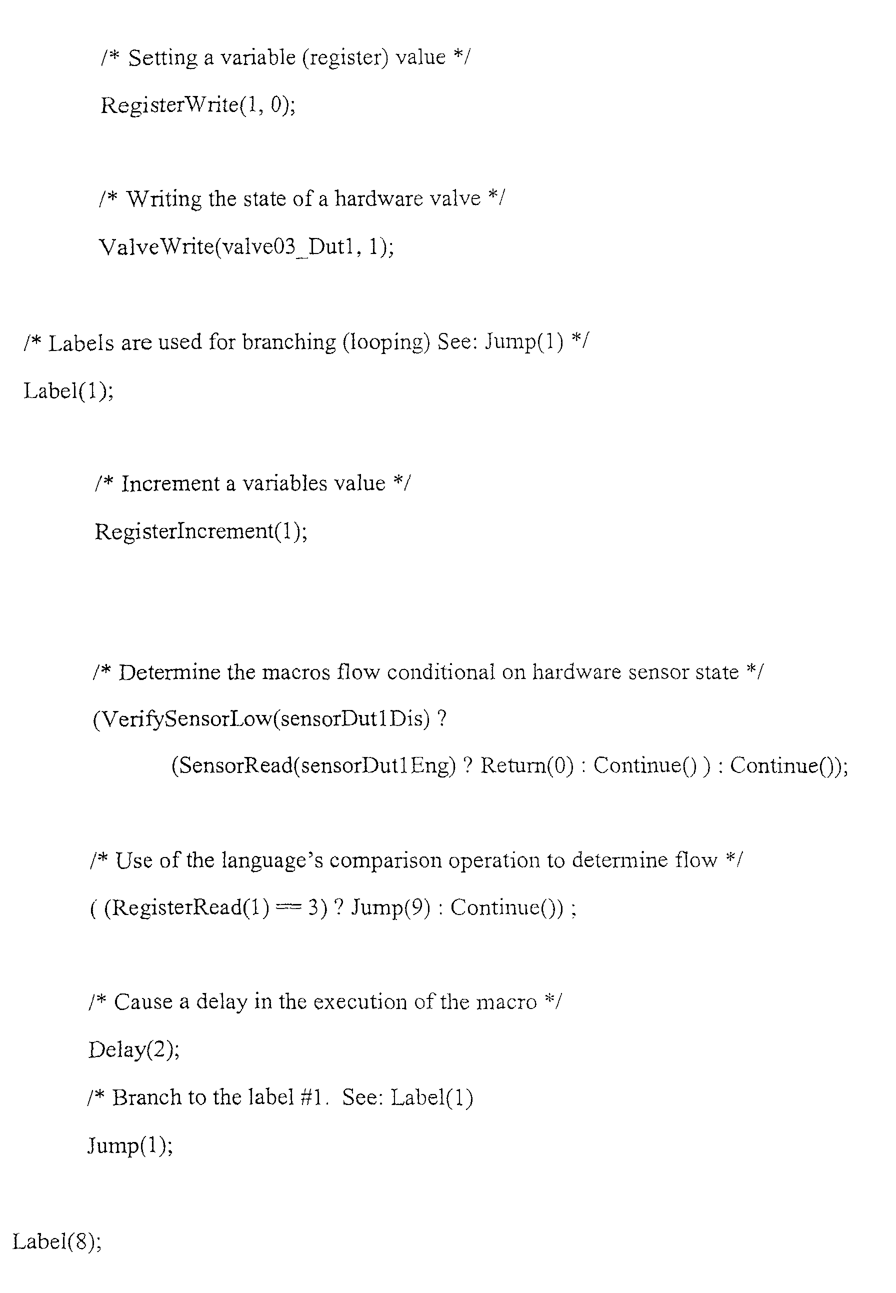

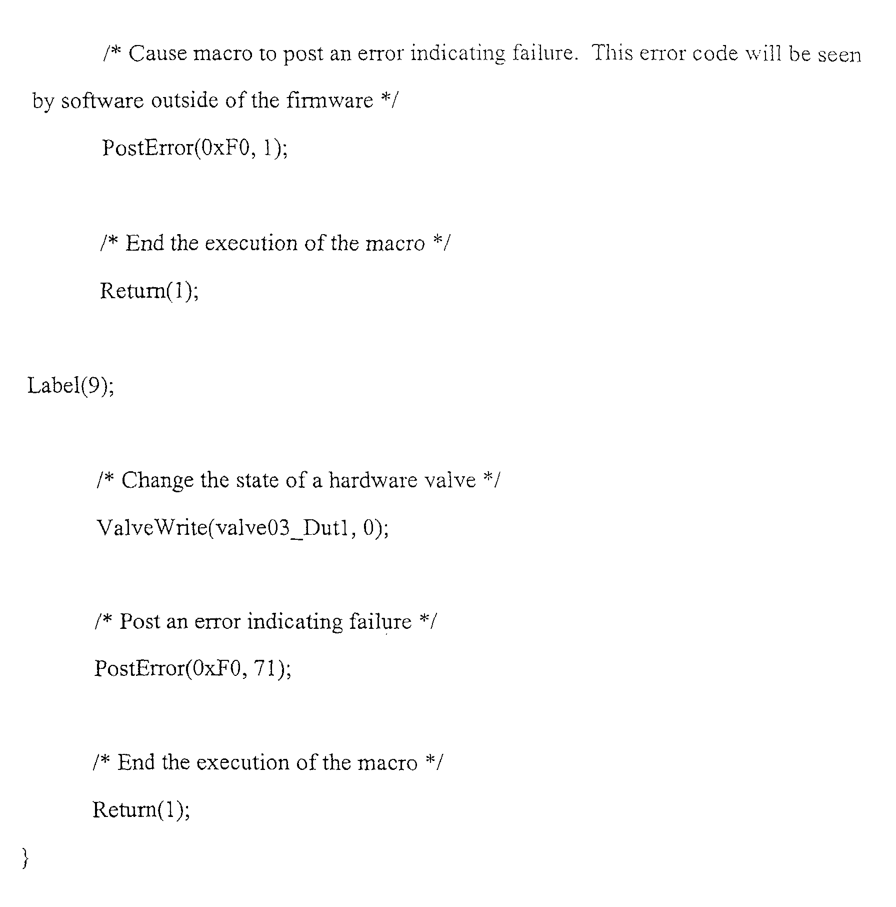

In the preferred embodiment of the present invention, the firmware is located on a chip with RAM. For example, the firmware could be located on a Motorola 68HC912D60 chip, with 2k of RAM. Also in the preferred embodiment, the fixturing device 430 contains nonvolatile memory. For example, 8k of nonvolatile memory, with an additional 8k of nonvolatile memory on a removable device coupled to the fixturing device 430.

In light of the foregoing, it is clear that the fixturing device of the present invention is operable to respond to events that are generated internally, said events causing one or more macros to be executed by firmware internal to the fixturing device. The structure of the fixture system also allows the number of commands sent from the controlling software to the internal software of the fixturing device to be reduced. This reduction further allows time critical commands to be executed without dependency on the controlling software. The choice of a macro language that is indirectly executed in response to stimuli allows the fixturing device be upgradeable independent of the changes to the firmware. Said macros are operable to be available upon powering up the fixturing device without the need to download from controlling software.

While the invention has been particularly shown and described with reference to a preferred embodiment, it will be understood by those skilled in the art that various changes in form and detail may be made therein without departing from the spirit and scope of the invention.

## Claims

1. A method for facilitating modification of a hardware state of a fixture system, comprising:
selecting a macro of one or more compiled macros in response to one or more stimuli, wherein:
said one or more macros are created using a high-level programming macro language (510);
compiling one or more macros into a format recognizable by an interpreter residing within a fixturing device (520);
transferring the one or more compiled macros to a firmware residing within the fixturing device (530-550); and
the firmware running the triggered macro and executing one or more commands contained therein in response thereto (560-580).

2. The method of claim 1, wherein the macro is triggered by one or more internal events corresponding to one or more hardware states of the fixturing device.

3. The method of claim 1, wherein the macro is triggered by one or more external commands transmitted by a control software module.

4. The method of claim 1, wherein the one or more macros are compiled into byte code (520).

5. The method of claim 1, wherein one of a revision code is downloaded with the byte code, said revision code operable to determine a version of one or more macros currently loaded within the fixturing device.

6. The method of claim 5, wherein during a system initialization, further comprising:
a control software comparing a first macro revision with a second macro revision determined by a default macro file; and
if the first macro revision and the second macro revision are not equivalent, the control software compiling and downloading the one or more macros from a file.

7. A structure that facilitates a modification of a hardware state of a fixturing device, further comprising:
a supervising automation software module (420), coupled to a control software module, said automation software module operable to initiate operation of the structure; and
a fixturing device (430), coupled to the control software module, said fixturing device further comprising:
a firmware module, said firmware module operable to receive one or more stimuli, preferably corresponding to one or more hardware state changes of said fixturing device;
one or more local memory modules, coupled to the firmware module, said local memory modules operable to contain one or more compiled macros and one or more stimuli preferably corresponding to one or more hardware states; and
the one or more macros, in response to the firmware module receiving one or more stimuli, causing one or more hardware states of the fixturing device to be changed.

8. The structure of claim 7, wherein the firmware module is operable to change one or more hardware states in response to the one or more stimuli.

9. The structure of claim 7, wherein the control software module sends one or more commands, receivable by the firmware.

10. The structure of claim 7, wherein the firmware module, upon receiving one or more commands, executes one or more macros contained within the one or more local memory modules.
